# EUROPÄISCHE PATENTANMELDUNG

(11) **EP 2 177 101 A1**
(43) Veröffentlichungstag der Anmeldung: **21.04.2010**
(21) Anmeldenummer: 09010902.6
(22) Anmeldetag: 26.08.2009
(51) Int. Cl.: A01D 90/04

(54) **Schneideinrichtung für Selbstladewagen und Aufsammelpressen**

(30) Priorität: 30.09.2008 DE 102008049587
(71) Anmelder: CLAAS Saulgau GmbH, 88348 Bad Saulgau (DE)
(72) Erfinder: Altepost, Helmut, 48477 Hörstel-Riesenbeck (DE); Prenzler, Jürgen, 88379 Unterwaldhausen (DE)

(57) **Zusammenfassung**

Verfahren und Vorrichtung zum Betreiben einer Schneideinrichtung (11) für Ladewagen oder Aufsammelpressen mit einer Pickup (6), einem umlaufend angetriebenen Förderroter (12) und einer Schneideinrichtung (11), bestehend aus quer zur Fahrtrichtung beabstandeten nebeneinander angeordneten feststehenden Schneidmessern (14), welche von einem Messerträger aufgenommen sind, wobei der Förderrotor (12) einen Erntegutstrom durch die Schneideinrichtung (11) hindurch fördert, wobei den Schneidmessern (14) ein Schwingungserreger (27) derart zugeordnet ist, dass den Schneidmessern (14) eine Schwingbewegung aufgezwungen wird.

## Beschreibung

Die Erfindung betrifft ein Verfahren und eine Vorrichtung zum Betreiben einer Schneideinrichtung für Selbstladewagen oder Aufsammelpressen gemäß den unabhängigen Ansprüchen.

### Stand der Technik

Selbstladewagen oder Aufsammelpressen werden in der Landtechnik eingesetzt, um auf dem Boden liegendes und bereits abgemähtes Pflanzengut aufzunehmen und um dieses zu zerkleinern und anschließend an den Laderaum zu übergeben. Selbstladewagen sind zu diesem Zweck mit einer Pick up, einem Förderrotor und einer Schneideinrichtung, bestehend aus einer Reihe nebeneinander angeordneten feststehenden Schneidmessern, ausgestattet. Als Antriebsquelle steht eine Zugmaschine, vorzugsweise ein Traktor, zur Verfügung. Aber auch selbstfahrende Ladewagen sind bekannt. Immer aber sind hohe spezifische Antriebsleistungen erforderlich, die mit entsprechend hohem Treibstoffverbrauch, hohen Kosten und hohem CO₂ Ausstoß verbunden sind.

### Aufgabenstellung

Vor dem Hintergrund zunehmender Bedeutung der Energiegewinnung aus nachwachsenden Rohstoffen ist es wichtig, die Energiebilanz dieses Energiegewinnungsprozesses nachhaltig zu verbessern. Hier setzt die Erfindung an, mit dem Ziel, die Energiebilanz zu verbessern und damit den Treibstoffverbrauch des Ernteprozesses und damit die Kosten und den CO₂ Ausstoß zu senken.

### Lösung der Aufgabe

Gelöst wird die Aufgabe der Erfindung mit den kennzeichnenden Merkmalen der unabhängigen Ansprüche. Weitere vorteilhafte Ausgestaltungen der Erfindung sind den abhängigen Ansprüchen, der Beschreibung und den Figurendarstellungen zu entnehmen.

Die Erfindung beschreibt ein Verfahren und eine Vorrichtung zur Minderung der Energieaufnahme an der Welle des Förderrotors von Selbstladewagen oder Aufsammelpressen. Dieses Verfahren ist **dadurch gekennzeichnet, dass** eine erste Relativbewegung zwischen Gutstrom und feststehenden Schneidmessern durch Zuführung des Gutstromes durch den Förderrotor erzeugt wird und eine zweite Relativbewegung zwischen Gutstrom und Schneidmessern durch eine Schwingbewegung, welche den Schneidmessern aufgezwungen wird. Die Schwingbewegung kann als Dreh- Pendel- Kreis- oder Linearbewegung ausgebildet sein.

Eine Vorrichtung zur Realisierung des Verfahrens ist demnach **dadurch gekennzeichnet, dass** den an sich feststehenden Schneidmessern Schwingungserreger zugeordnet sind.

Ein erheblicher Anteil der Energie zum Antreiben des Förderrotors eines Selbstladewagens muss für die Überwindung der Reibkräfte, die auf diese im laufenden Ladebetrieb einwirken, aufgebracht werden. Diese Reibkräfte wirken sich als Bremskräfte an der Abtriebswelle des Förderrotors aus, welches zu einer Erhöhung des Drehmomentes an der Abtriebswelle und damit zur Erhöhung der Leistungsaufnahme führt. Die Erfindung senkt die Reibkräfte, indem der Reibungskoeffizient zwischen dem einlaufenden Gutstrom und den Schneidmessern durch Schwingungen gemindert wird.

Erfindungswesentlich ist, dass den Schneidmessern relativ zum Gutstrom eine zweite Bewegungsform aufgezwungen wird, deren Ursprung eine Erregerkraft eines Schwingungserregers zur Anregung einer Schwingbewegung darstellt.

Dabei kann die Schwingbewegungsform ein- oder zweidimensional, als Linear- oder Kreisschwingung ausgebildet sein. Erregerkräfte zum Anregen der Schwingungen können beispielsweise generiert werden durch eine umlaufende Unwuchtmasse, welche eine Zentrifugalkraft verursacht, einen hydraulisch oder elektrisch auf Magnetkräfte basierenden Pulsator, oder auch durch Kräfte, basierend auf den Piezo-elektrischen Effekt oder Ultraschall, welcher von Kristallausdehnungen verursacht wird.

Nachfolgend sind zum besseren Verständnis der Erfindung verschiedene Ausführungsbeispiele ausführlich dargelegt.

### Ausführungsbeispiel

Nachfolgend ist ein Ausführungsbeispiel für eine Schneideinrichtung eines Selbstladewagens dargestellt, welches sich auch ohne weiteres auf die Schneideinrichtung einer Aufsammelpresse übertragen lässt.

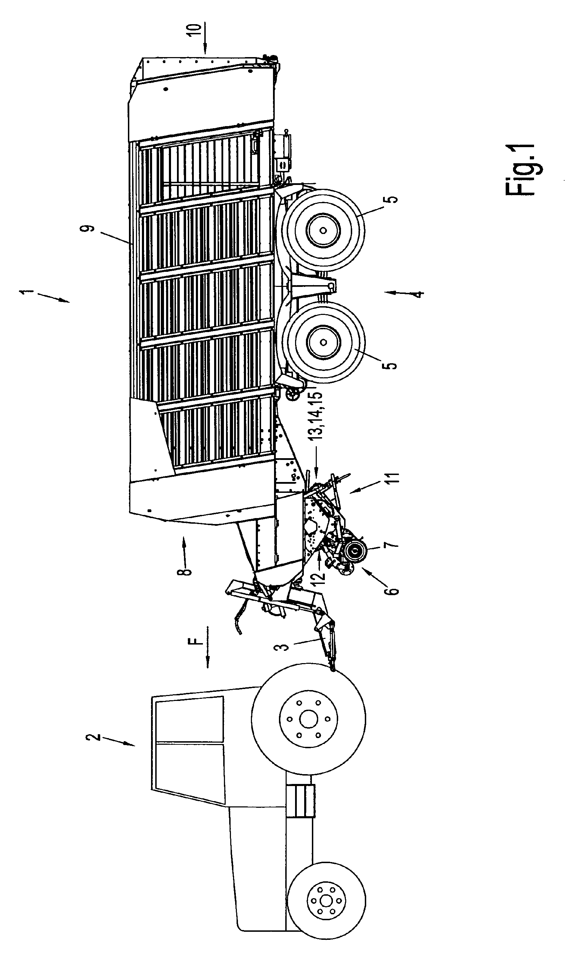

Fig.1 zeigt einen Ladewagen 1 in Betriebsstellung in einer Seitenansicht mit vorgespanntem Zugfahrzeug als Traktor 2. Der Selbstladewagen 1 ist mittels einer Zugdeichsel 3 an das Zugfahrzeug 2 angehängt.

Es wird in der nachfolgenden Beschreibung des Ausführungsbeispiels unterstellt, dass auch die üblicherweise an einem Traktor vorhandenen Zapfstellen, die dem Fachmann bekannt sind, nämlich Zapfwelle, hydraulische, pneumatische und elektrische Energieversorgung, an dem Selbstladewagen 1 angeschlossen sind, so dass an dieser Stelle darauf nicht näher eingegangen werden muss. Der Ladewagen 1 besteht im Wesentlichen aus den Grundelementen Fahrgestell mit Tandemachse 4, Pick up 6 mit Tastrad 7 und der Schneideinrichtung 11, umfassend den Förderrotor 12 und die Messeranordnung 13, wobei der als Querträger 16 ausgebildete Schneidrahmen 15 die Schneidmesser 14 aufnimmt.

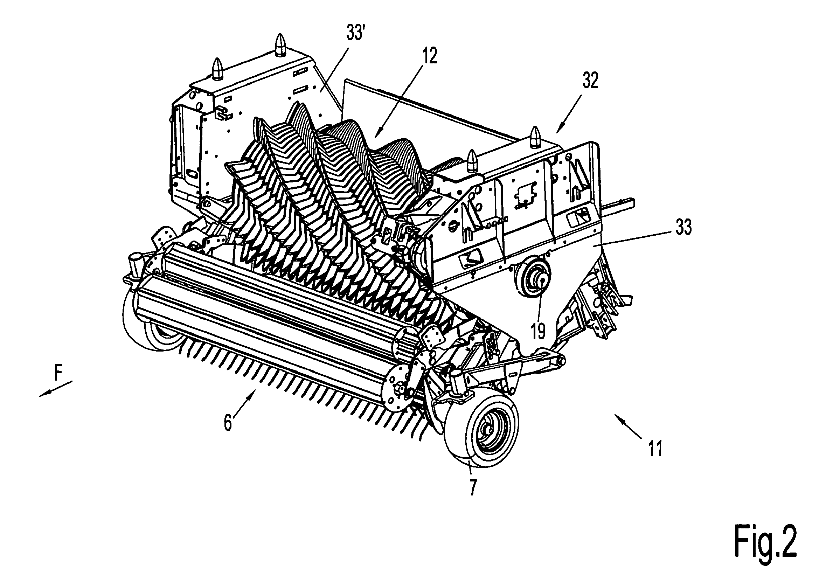

Fig.2 zeigt die freigelegte Schneideinrichtung 1 mit vorgelagerter Pick up 6 in einer Ansicht entgegen der Fahrtrichtung F.

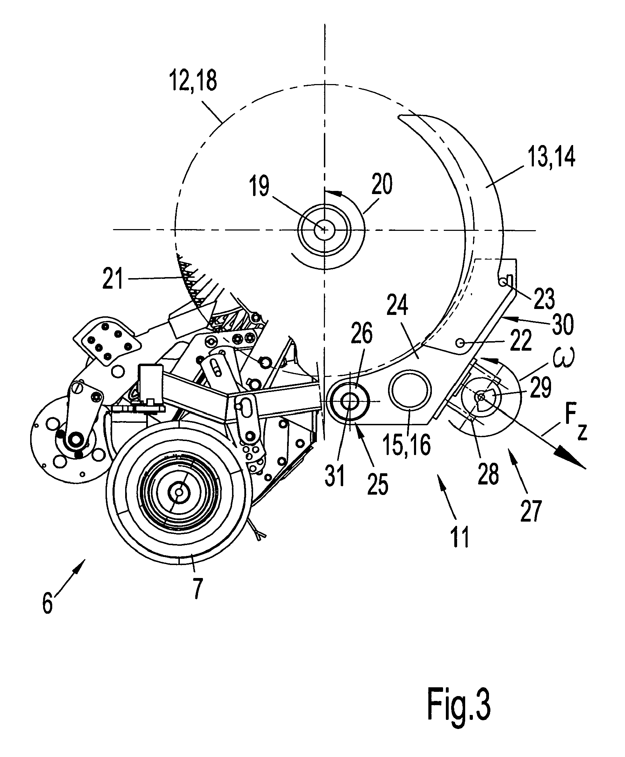

In an sich bekannter Weise ist dem Förderrotor 12 die Pick up 6 vorgelagert und dem Förderrotor nachgeordnet ist die Messeranordnung 13, wobei Förderrotor 12 und Messeranordnung 13 die eigentliche Schneideinrichtung 11 bilden. Fig.3 zeigt eine freigelegte und vereinfacht dargestellte Seitenansicht des Förderrotors 12 und dessen Messeranordnung 13.

Der Förderotor 12 ist umlaufend angetrieben um die Drehachse 19 mit der Drehrichtung 20 in den Seitenwänden 33,33' eines Gehäuses 32, welches sich am Fahrgestell des Ladewagens 1 abstützt, gelagert.

Die Drehrichtung 21 ist dabei so gewählt, dass die umlaufenden Förderzinken 21 des Förderrotors 12 den Gutstrom erfassen und diesen durch die kammartig nebeneinander angeordneten Schneidmesser 14 der Messeranordnung 13 hindurch ziehen bzw hindurch pressen. Die Schneidmesser 14 werden von Fixierbolzen 22,23 aufgenommen, die an Flanschen 24 befestigt sind und die mit dem Querträger 16 als Teil des Schneidrahmens 15 verschweißt sind.

Der Schneidrahmen 15 wird von Schwenklagern 25 aufgenommen, welche zugleich als Schwingelemente 26, beispielsweise ausgeführt als elastomere Torsionselemente ausgeführt sind. Der Schneidrahmen 15 wird in seiner in Fig.3 dargestellten Betriebsstellung von nicht näher dargestellten Stellelementen, vorzugsweise Hydraulikzylindern, in seiner Position gehalten und fixiert. Der Schneidrahmen 15 nimmt zugleich einen Schwingungserreger 27, beispielsweise einen elektrisch oder hydraulisch angetriebenen Rüttelmotor 28, auf, welcher durch seine rotierenden Unwuchtstücke 29 Zentrifugalkräfte F_{z} erzeugen und mit diesen den Schneidrahmen 15 in Schwingungen versetzen kann. Da der Schneidrahmen 15 gleichzeitig die Schneidmesser 14 als Messerträger 30 aufnimmt, werden somit auch die Schneidmesser 14 in Schwingungen versetzt. Je nach konstruktiver Ausgestaltung und Anordnung der Schwingungserreger 27 kann der Messerträger 30 Horizontal- oder Vertikalschwingungen oder Pendelschwingungen oder eine Kombination von allem ausführen. Der in Fig.3 dargestellte Schwingungserreger 27 als Zentrifugalkrafterreger stellt ein Ausführungsbeispiel für eine derartige Überlagerung von Schwingungen dar. Je nach der momentanen Drehwinkellage ϕ, gekennzeichnet durch das Produkt aus ϕ = ω*t, des mit der Winkelgeschwindigkeit w rotierenden Unwuchtstücks 29 durchläuft die Zentrifugalkraft F_{z} als rotierender Kraftvektor alle vier Quadranten und erzeugt somit eine Kreisschwingung und zugleich eine Pendelschwingung um die Schwenkachse 31 des als Schwingelement 26 ausgebildeten Schwenklagers 25.

Es können auch mehrere Schwingungserreger 27, z.B. ausgeführt als Rüttelmotore 28 auf einer diesen gemeinsamen Flanschplatte 32 montiert sein und in Reihe liegen, deren Wellen untereinander durch Kuppelelemente miteinander verbunden zwangsweise synchronisiert sind. Dabei sind die Unwuchtstücke 29 so zueinander ausgerichtet, dass sie alle die gleiche Phasenlage einnehmen und dadurch die Zentrifugalkräfte F_{z} aller Unwuchtstücke 29 ebenfalls die gleiche Phasenlage einnehmen und sich zur resultierenden Erregerkraft geometrisch addieren, welches die Amplituden der Schwingungen entsprechend vergrößert.

In besonders vorteilhafter weise kann die Erregerfrequenz stufenlos einstellbar sein und damit auf die jeweiligen Erntgutströme optimal eingestellt werden. Dieses kann durch eine zentrale Steuerung vom Zugfahrzeug aus geschehen, indem beispielsweise die Drehfrequenz und damit die Winkelgeschwindigkeit ω der Rüttelmotore 28 verändert werden kann. Analog gilt dieses auch für andere Schwingungserreger 27. Auch können die Unwuchten eines Rüttelmotors 25 beispielsweise aus zwei direkt nebeneinander liegenden Unwuchstücken 29 bestehen, die in ihrer Lage relativ zueinander verdrehbar sind und die danach wieder in dieser Lage drehfest miteinander fixiert werden, wodurch sich ein neues Arbeitsmoment und dadurch eine veränderte Amplitude der Schwingungsform einstellt.

Die Art der Schwingungserregung ist in diesem Ausführungsbeispiel lediglich als beispielhaft anzusehen. Alternativ können die Schwingungen auch durch hydraulische Pulsatore oder auch durch Piezoschwinger, beispielsweise im Ultraschallbereich, angeregt werden. Auch diese Erregerfrequenzen und deren Amplituden lassen sich leicht auch fernverstellbar durch eine zentrale Steuerung variieren.

### Bezugszeichenliste

- 1: Ladewagen
- 2: Zugfahrzeug, Traktor
- 3: Zugdeichsel
- 4: Tandemachse
- 5: Laufräder
- 6: Pick up
- 7: Tastrad
- 8: Stirnwand
- 9: Seitenwand
- 10: Heckklappe
- 11: Schneideinrichtung
- 12: Förderrotor
- 13: Messeranordnung
- 14: Schneidmesser
- 15: Schneidrahmen
- 16: Querträger
- 17: Rotationsachse
- 18: Konturenkreis
- 19: Drehachse
- 20: Drehrichtung
- 21: Förderzinken
- 22: Fixierbolzen
- 23: Fixierbolzen
- 24: Flansch
- 25: Schwenklager
- 26: Schwingelement
- 27: Schwingungserreger
- 28: Rüttelmotor
- 29: Unwuchtstück
- 30: Messerträger
- 31: Schwenkachse
- 32: Gehäuse
- 33,33': Seitenwände

- F: Fahrtrichtung
- F_{z}: Zentrifugalkraft
- ω: Winkelgeschwindigkeit

### Formelzeichen:

- t: Zeit
- ϕ: Drehwinkel

## Patentansprüche

1. Verfahren zum Betreiben einer Schneideinrichtung für Ladewagen oder Aufsammelpressen, mit einer Pickup, einem umlaufend angetriebenen Förderroter und einer Schneideinrichtung bestehend aus quer zur Fahrtrichtung beabstandeten nebeneinander angeordneten feststehenden Schneidmessern, welche von einem Messerträger aufgenommen sind, wobei der Förderrotor einen Erntegutstrom durch die Schneideinrichtung hindurch fördert, **dadurch gekennzeichnet, dass** eine erste Relativbewegung zwischen Gutstrom und Schneidmessern (14) durch die Förder- bzw Umlaufbewegung des Förderrotors (12) und eine zweite Relativbewegung zwischen Gutstrom und Schneidmessern (14) durch eine von einem Schwingungserreger (27) verursachte Schwingbewegung der Schneidmesser (14) erzeugt wird.

2. Verfahren nach Anspruch 1, **dadurch gekennzeichnet, dass** die Schwingbewegung eine Linearschwingung ist.

3. Verfahren nach Anspruch 1, **dadurch gekennzeichnet, dass** die Schwingbewegung eine Kreisschwingung ist.

4. Verfahren nach Anspruch 1, **dadurch gekennzeichnet, dass** die Schwingbewegung eine Pendelschwingung ist.

5. Verfahren nach Anspruch 1, **dadurch gekennzeichnet, dass** die Schwingbewegung eine Zusammensetzung aus Linear- und Pendelschwingung ist.

6. Verfahren nach Anspruch 1, **dadurch gekennzeichnet, dass** die Schwingbewegung eine Zusammensetzung aus Dreh- und Pendelschwingung ist.

7. Verfahren nach Anspruch 1, **dadurch gekennzeichnet, dass** die Schwingbewegung von einem Schwingungserreger (27), ausgebildet als ein mit umlaufend angetriebenen Unwuchtstücken (29) besetztem Rüttelmotor (28), erzeugt wird.

8. Verfahren nach Anspruch 1, **dadurch gekennzeichnet, dass** die Schwingbewegung von einem Schwingungserreger (27), ausgebildet als hydraulischer Pulsator, erzeugt wird.

9. Verfahren nach Anspruch 1, **dadurch gekennzeichnet, dass** die Schwingbewegung von einem Schwingungserreger (27), ausgebildet als Piezoschwinger, erzeugt wird.

10. Verfahren nach Anspruch 1, **dadurch gekennzeichnet, dass** die Erregerfrequenz der Schwingbewegung im Ultraschallbereich liegt.

11. Verfahren nach Anspruch 1, **dadurch gekennzeichnet, dass** die Erregerfrequenz des Schwingungserreger (27) stufenlos einstellbar ist.

12. Vorrichtung zum Betreiben einer Schneideinrichtung für Ladewagen oder Aufsammelpressen mit einer Pickup, einem umlaufend angetriebenen Förderroter und einer Schneideinrichtung, bestehend aus quer zur Fahrtrichtung beabstandeten nebeneinander angeordneten feststehenden Schneidmessern, welche von einem Messerträger aufgenommen sind, wobei der Förderrotor einen Erntegutstrom durch die Schneideinrichtung hindurch fördert, **dadurch gekennzeichnet, dass** den Schneidmessern (14) ein Schwingungserreger (27) derart zugeordnet ist, dass den Schneidmessern (14) eine Schwingbewegung aufgezwungen wird.

13. Vorrichtung nach Anspruch 12, **dadurch gekennzeichnet, dass** der Schwingungserreger (27) wenigstens einen umlaufend angetriebenen mit Unwuchtstücken (29) besetzten Rüttelmotor (28) umfasst.

14. Vorrichtung nach Anspruch 12, **dadurch gekennzeichnet, dass** der Schwingungserreger (27) wenigstens einen hydraulischen Pulsator umfasst.

15. Vorrichtung nach Anspruch 12, **dadurch gekennzeichnet, dass** der Schwingungserreger (27) wenigstens einen Piezoschwinger umfasst.

16. Vorrichtung nach Anspruch 12 in Verbindung mit wenigstens einem der Ansprüche 13 bis 16, **dadurch gekennzeichnet, dass** die Erregerfrequenz bzw die Winkelgeschwindigkeit (w) des Schwingungserregers (27) stufenlos einstellbar ist.

17. Vorrichtung nach Anspruch 12 in Verbindung mit wenigstens einem der Ansprüche 13 bis 16, **dadurch gekennzeichnet, dass** die Amplitude des Schwingungserregers (27) stufenlos einstellbar ist.

18. Vorrichtung nach Anspruch 12, **dadurch gekennzeichnet, dass** der Schwingungserreger Teil des Messerträgers (30) ist

19. Vorrichtung nach Anspruch 12 in Verbindung mit wenigstens einem der Ansprüche 13 bis 16, **dadurch gekennzeichnet, dass** der Messerträger (30) in wenigstens einem Schwingelement (26) gelagert ist.

20. Vorrichtung nach Anspruch 17, **dadurch gekennzeichnet, dass** das wenigstens eine Schwingelement (26) ein elastomeres Schwingelement (26) ist.

21. Vorrichtung nach Anspruch 17, **dadurch gekennzeichnet, dass** das wenigstens eine Schwingelement (26) als Schwenklager ausgebildet ist.

22. Vorrichtung nach Anspruch 12, **dadurch gekennzeichnet, dass** die Schneideinrichtung (1) Teil eines Selbstladewagens ist.

23. Vorrichtung nach Anspruch 12, **dadurch gekennzeichnet, dass** die Schneideinrichtung (1) Teil einer Aufsammelpresse ist
